# EUROPEAN PATENT APPLICATION

(11) **EP 3 859 952 A1**
(43) Date of publication of application: **04.08.2021**
(21) Application number: 19866830.3
(22) Date of filing: 24.09.2019
(51) Int. Cl.: H02K 11/02, H02K 1/17

(54) **PERMANENT MAGNET DIRECT-CURRENT ELECTRIC MOTOR**

(30) Priority: 30.09.2018 CN 201811155023
(71) Applicant: Guangdong Zhaoqing L & V Co. Ltd, Zhaoqing, Guangdong 526238 (CN)
(72) Inventor: GONG, Hongyu, Zhaoqing, Guangdong 526238 (CN); FENG, Chen, Zhaoqing, Guangdong 526238 (CN); TIAN, Li, Zhaoqing, Guangdong 526238 (CN); CHEN, Liang, Zhaoqing, Guangdong 526238 (CN); YAN, Mingchu, Zhaoqing, Guangdong 526238 (CN)
(74) Representative: Banzer, Hans-Jörg
(86) International application number: PCT/CN2019/107497
(87) International publication number: WO 2020/063580

(57) **Abstract**

The present application relates to a permanent magnet DC motor, which comprises a stator assembly and a rotor assembly, wherein the stator assembly comprises a housing and a magnetic cylinder, and the rotor assembly comprises a rotor; the rotor, the magnetic cylinder and the housing are sequentially arranged from inside to outside; the ratio of an angle corresponding to a commutation section of the surface magnetic curve of the magnetic cylinder to the corresponding angle of the surface magnetic curve of the corresponding magnetic pole is less than or equal to 15%; and the outer peripheral contour of the magnetic cylinder is based on a regular polygon, and curves are arranged at the connections of sides of the regular polygon to smoothly connect the sides of the regular polygon. The motor of the present application reduces the noise and vibration of the motor and improves its EMC level.

## Description

### Technical Field

The present application relates to the field of motors, and particularly relates to a permanent magnet DC motor.

### Background art

Permanent magnet DC motors are widely used in various portable electronic equipment or other devices. With the continuous improvement of intelligence and comfort of automobiles, permanent magnet DC motors are widely used in automobiles, such as multi-directional adjustment of seats and adjustment of windows. The application environment of permanent magnet DC motor leads to a need for low noise and vibration. In addition, there is a high requirement for the Electro Magnetic Compatibility (EMC) level of permanent magnet DC motors when used in automobiles due to the presence of various electronic devices in automobiles, to avoid any effect on the normal operation of automobiles. EMC, according to its contents, can be divided into electromagnetic interference (EMI) and electromagnetic sensitivity (EMS). For all kinds of products driven by small permanent magnet DC motors, there are usually only EMI problems, while EMI can be divided into conducted interference and radiated interference.

EMI sources of permanent magnet DC motor include sparks of motor, nonlinear devices such as thyristor, diode and transistor switch, and magnetic circuit of motor. At present, there are many ways to suppress EMI, such as retrofitting filters into products as shielding means, and suppressing reactance potential by adjusting the turns ratio of rotor coils or increasing the number of commutator segments, and so on. However, none of the above measures can effectively suppress EMI, because it will either increase the cost of the motor or weaken other performances of the motor.

In addition, there are also requirements for the shape and installation of permanent magnet motors. Common permanent magnet DC motor housings are round or square. For a round structure, although the manufacturing is convenient and the space required for installation is relatively small, it is necessary to additionally set up fixing element(s) to fix the motor, so as to prevent it from rotating as a whole, which increases the demand for installation space and the complexity of installation.

For a square structure, it can naturally prevent the motor from rotating due to the sides, but there are two problems for such a shape: in some irregular installation spaces, it may be difficult to install simply for the interference of a certain corner; due to the round shape of the rotor, the volume of the magnetic cylinder with a square outer contour and a circular inner contour is much larger at the corners than the volume between two adjacent corners, which makes the distribution of magnets extremely uneven, obviously reduces the motor performance, and leads to the waste of magnetic materials at the corners of the magnetic cylinder.

### Summary of the Invention

To solve the above technical problems to a certain extent, the present application proposes the following technical solutions.

A permanent magnet DC motor comprises a stator assembly and a rotor assembly, wherein the stator assembly comprises a housing and a magnetic cylinder, and the rotor assembly comprises a rotor; the rotor, the magnetic cylinder and the housing are sequentially arranged from inside to outside; and the ratio of an angle corresponding to a commutation section of the surface magnetic curve of the magnetic cylinder to an angle corresponding to the surface magnetic curve of a corresponding magnetic pole is less than or equal to 15%.

According to the above technical solution, the present application provides a new method for improving the EMC level of the motor, i.e., by defining the surface magnetic curve of the magnetic cylinder. Compared with the methods discussed in the background art, this method does not need to install any new components, and does not increase the processing and manufacturing costs, and has the advantages of low cost and easy implementation.

Further, the surface magnetic curve in the commutation section of the magnetic cylinder is a straight line, a curve or a combination of straight lines and curves.

In addition, the invention also defines the contours of the magnetic cylinder and the housing of the motor, wherein the outer peripheral contour of the magnetic cylinder is based on a regular polygon, and curves are arranged at the connections of the sides of the regular polygon so as to smoothly connect all sides of the regular polygon.

With a permanent magnet DC motor obtained by the above technical solution, the amount of NdFeB materials can be effectively reduced because the shapes of the magnetic cylinder and the housing are not simple regular or round, so a better balance can be achieved among the installation space of the motor, the cost of magnetic materials and the performance of the motor.

### Brief Description of the Drawings

Exemplary embodiments of the present application will be described with reference to the accompanying drawings, in which:
Fig. 1 schematically shows the overall structure of a permanent magnet DC motor according to the present application.
Fig. 2 is a diagram showing a surface magnetic curve of the magnetic cylinder of the permanent magnet DC motor of the present application.
Fig. 3a shows a surface magnetic curve in the form of sine wave in the prior art.
Fig. 3b shows a surface magnetic curve with characteristics defined by the present application.
Fig. 4 shows a conductive radiation test diagram of the motor with the magnetic cylinder having the surface magnetic curves in Figs. 3a and 3b.
Fig. 5 shows a radiation emission test diagram of the motor with the magnetic cylinder having the surface magnetic curves in Figs. 3a and 3b.
Fig. 6 schematically shows the structure of the permanent magnet DC motor of the present application illustrating the commutation section.

All the drawings are only schematic and not necessarily drawn to scale, and they only show those parts necessary to illustrate the present application, and other parts are omitted or only mentioned. That is, the present application may include other components besides those shown in the drawings.

### Detailed description of the Embodiments

The following is a detailed description of the technical solutions of the present application with reference to the accompanying drawings.

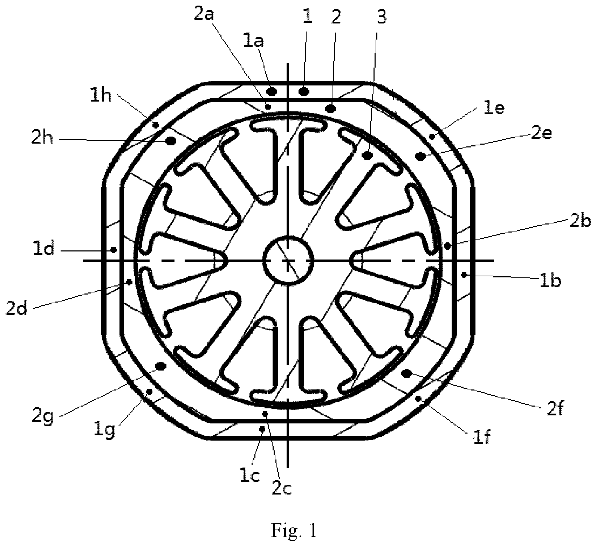

Referring to Fig. 1, the permanent magnet DC motor of the present application comprises a stator assembly and a rotor assembly, wherein the stator assembly comprises a housing 1 and a magnetic cylinder 2, and the rotor assembly comprises a rotor 3. The rotor 3, magnetic cylinder 2 and housing 1 are arranged sequentially from inside to outside. The rotor 3 is provided on a rotor shaft (not shown), which serves as an output shaft. Rotor 3 includes rotor poles and windings. The rotor 3 has a circular outer peripheral on which a magnetic cylinder 2 is arranged. The inner wall profile of the magnetic cylinder 2 is circular and its diameter is slightly larger than the outer diameter of the rotor 3, that is, there is an air gap between the inner wall of the magnetic cylinder 2 and the outer peripheral of the rotor 3. In Fig. 1, there are four magnetic poles of the magnetic cylinder. However, those skilled in the art shall know that other numbers of magnetic poles can be provided, such as 2, 6, 8, 10, etc.

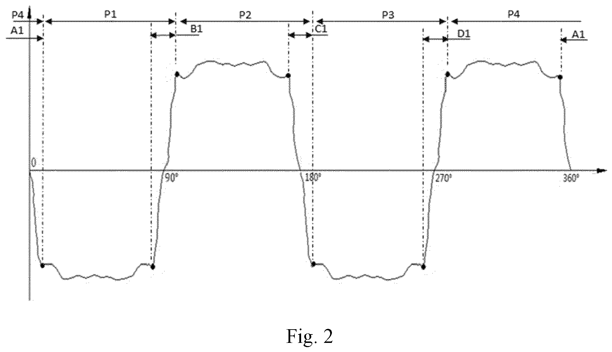

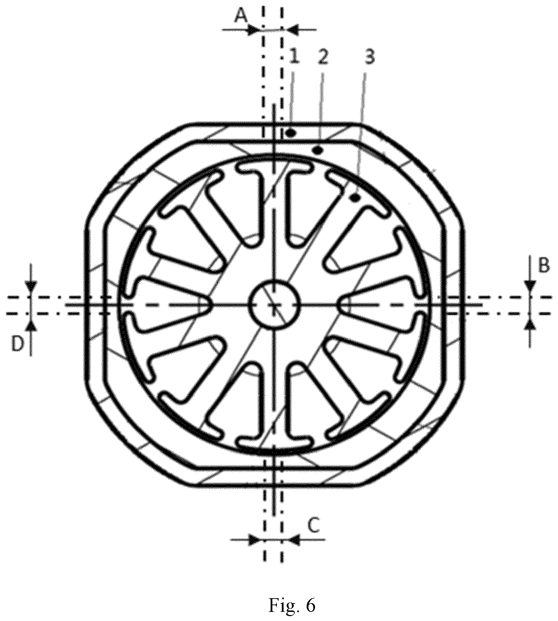

To improve the EMC level of the motor, especially the performance related to EMI, the surface magnetic curve of the magnetic cylinder of the motor in Fig. 1 is defined as shown in Fig. 2, according to the embodiment of the present application. The transition region for the shifting of N pole to S pole is defined as a commutation section. It can be seen from Fig. 2 that there are four commutation sections in the surface magnetic curve, and the commutation sections are narrow. The surface magnetic curve of the magnetic cylinder has the following characteristics: the surface magnetic curve is between N and S poles, and the greater the slope, the better. In other words, the steeper the surface magnetic curve between N and S poles, the better. A1, B1, C1 and D1 are different commutation sections in the whole cycle, while P1, P2, P3 and P4 correspond to different individual magnetic pole sections. Fig. 6 shows commutation sections A to D of the motor with the surface magnetic curve in the example shown in Fig. 1.

According to a preferred embodiment of the present application, taking the magnetic pole P1 and its corresponding commutation section B1 as an example, the ratio of an angle corresponding to the commutation section and an angle corresponding to the surface magnetic curve of the corresponding magnetic pole satisfies: B1 ÷ P1 × 100%≤ 15%. The surface magnetic curve is obtained by measuring the surface magnetic induction intensity of the motor housing after it is mounted into the magnetic cylinder and magnetized. It should be noted here that in order to better show the proportional relationship between the commutation section and the magnetic pole, each of P1, P2, P3 and P4 in Fig. 2 does not strictly correspond to a single magnetic pole section, but is offset in the same proportion, so that they just contain the corresponding commutation section.

The types of magnetizing surface magnetic curves in sections A1, B1, C1 and D1 can include, but not limited to, straight lines, curves, zigzag lines or any combination of them. In addition, the waveforms of the surface magnetic curves corresponding to the respective magnetic poles are the same. In other words, as shown in Fig. 2, the waveform of the surface magnetic curve corresponding to P1 is the same as that of the surface magnetic curve corresponding to P3, while the waveform of the surface magnetic curve corresponding to P1 is the same as that of the surface magnetic curve corresponding to P2, but with an opposite polarity.

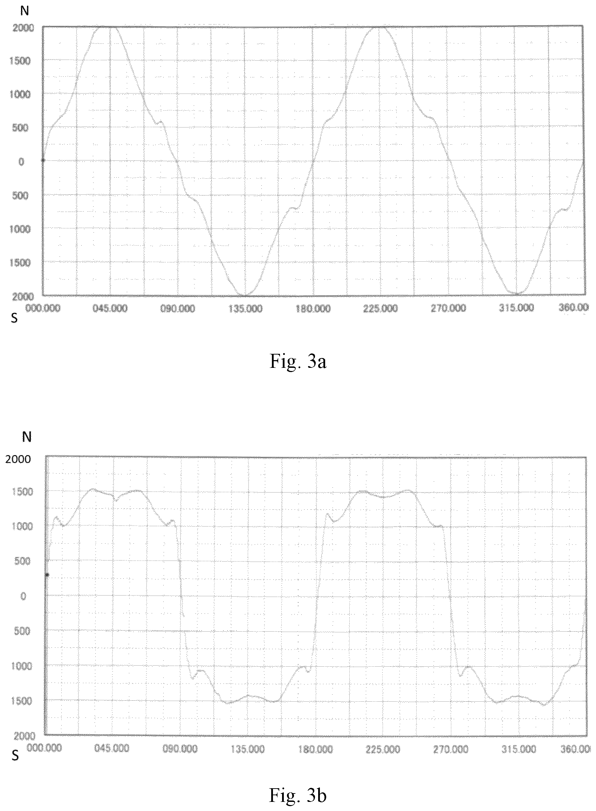

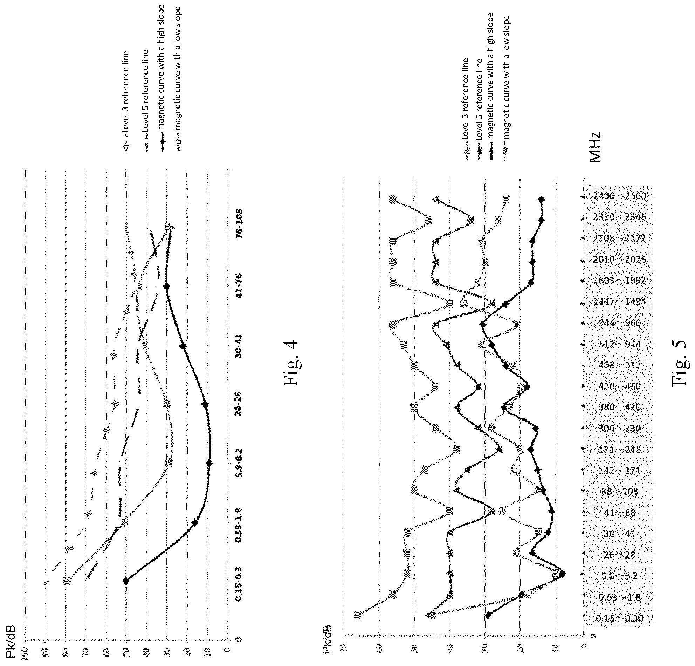

By comparing a motor with a magnetic cylinder having a surface magnetic curve in the form of the conventional sine wave as shown in Fig. 3a with a motor with a surface magnetic curve according to the present application as shown in Fig. 3b, the EMI for the two is tested, and the results are shown in Figs. 4 and 5. Fig. 4 is a comparative test result of conducted emission (CE), and Fig. 5 is a comparative test result of radiation emission (RE). In Fig. 4, the upper two curves are the reference lines of the third level and the fifth level, while the lower ones are the CE levels of motors corresponding to the surface magnetic curves in Figs. 3a and 3b, respectively. Provided that the curve which is substantially lower than the reference line is considered to satisfy the standard, it can be seen that the CE level of the motor adopting the surface magnetic curve of the present application has been improved from the third level to the fifth level, comparing with the traditional surface magnetic curve in sine wave form. In Fig. 5, the upper two curves are the reference lines of the third level and the fifth level, while the lower ones are the RE levels of motors corresponding to the surface magnetic curves in Figs. 3a and 3b, respectively. Similarly, it is regarded that the curve substantially lower than the reference line satisfies the standard. Comparing with the traditional surface magnetic curve in sine wave form, the RE level of the motor adopting the surface magnetic curve of the present application is also improved to a certain extent, reaching the fifth level.

Although the above embodiments are illustrated by taking a magnetic cylinder with four magnetic poles as an example, the present application is not limited to four magnetic poles, but focuses on limiting a surface magnetic curve with a high slope, and especially with a ratio of the preferred commutation section to a single magnetic pole of less than 15%. The specific magnetizing method adopted to obtain the specific type of surface magnetic curve of the present application is not the point of the present application, and this can be obtained by those skilled in the art as required. For example, by changing the width of the slot of the magnetizing jig, the ratio of the arc length of the slot on the outermost peripheral edge of the magnetizing jig to the arc length of a single magnetic pole can be less than or equal to 15%.

It can be known that, in the present application, by defining the surface magnetic curve of the magnetic cylinder of the motor with a high slope, two important aspects of EMI, i.e., the levels of CE and RE, are improved, thus improving the EMC level.

As an important improvement of the present application, returning to Fig. 1, the outer peripheral contour of the magnetic cylinder 2 is based on a regular polygon, and there are curves at the connections of the sides of the regular polygon. In other words, the outer peripheral contour of the magnetic cylinder 2 is a combination of straight sides and curved sides. Specifically, in the exemplary embodiment shown in Fig. 1, the outer peripheral contour of the magnetic cylinder 2 includes four straight sides 2a, 2b, 2c, 2d and four curved sides 2e, 2f, 2g, 2h, wherein the inner and outer contours of the four straight sides are straight segments, while the inner and outer contours of the four curved sides are curved, and the straight sides are alternately connected with the curved sides, and the curve of each curved side smoothly connects the straight segments at both ends. Therefore, in terms of the thickness of the magnetic cylinder 2, the thickness of the straight side, i.e., the part of the outer peripheral contour of the magnetic cylinder 2 which forms as a straight segment, is smaller, while the thickness of the curved side, i.e., the part of the outer peripheral contour of the magnetic cylinder 2 which forms as a curve, is larger.

A housing 1 is provided outside of the magnetic cylinder 2. The inner contour of the housing 1 is matched with the outer contour of the magnetic cylinder 2. That is, as shown in Fig. 1, the housing 1 also includes four straight sides 1a, 1b, 1c, 1d and four curved sides 1e, If, 1g, 1h. Similarly, the inner and outer contours of straight sides are straight segments, while the inner and outer contours of curved sides are curves. The straight sides are alternately connected with the curved sides, and the curve of each curved side smoothly connects the straight segments at both ends. The thickness of the housing 1 is preferably the same everywhere.

In the assembled motor, there is no gap between the outer straight side part of the magnetic cylinder 2 and the inner straight side part of the housing 1, but there is a gap between the outer curved part of the magnetic cylinder 2 and the inner curved part of the housing 1, for facilitating the assembly and fixing.

With the above structural arrangement, the permanent magnet motor of the present application adopts a design with a combination of straight sides and curved sides, which improves the adaptability of its shape to the installation space, and achieves a balance between the material consumption and the motor performance.

Although the specific structure of four straight sides and four curved sides has been described in the above embodiments, it is obvious that the number of sides of the housings 1 and magnetic cylinders 2 of the permanent magnet DC motor in the present invention is not limited to this, and the motor can be a regular polygon structure with any number of sides having curved connecting sections, preferably six straight sides with six curved sides, or eight straight sides with eight curved sides or ten straight sides with ten curved sides. A regular polygon with more sides is also feasible, though it is not a preferred solution considering factors such as manufacturing cost.

With reference to the above exemplary embodiments, the present application has been clearly and completely explained, and those skilled in the art should understand that various other embodiments can be envisaged by modifying the disclosed technical scheme without departing from the spirit and scope of the present application. These embodiments should be understood as falling within the scope of the present invention based on the claims and any equivalent technical solutions thereof.

## Claims

1. A permanent magnet DC motor, comprising a stator assembly and a rotor assembly, wherein the stator assembly comprises a housing (1) and a magnetic cylinder (2), and the rotor assembly comprises a rotor (3), the rotor (3), the magnetic cylinder (2) and the housing (1) being sequentially arranged from inside to outside, **characterized in that** the ratio of an angle corresponding to a commutation section (B1) of the surface magnetic curve of the magnetic cylinder (2) to an angle corresponding to the surface magnetic curve of a corresponding magnetic pole (PI) is less than or equal to 15%.

2. The permanent magnet DC motor according to claim 1, **characterized in that** the surface magnetic curve in the commutation section of the magnetic cylinder (2) is a straight line, a curve or a combination of straight lines and curves.

3. The permanent magnet DC motor according to claim 1, **characterized in that** the outer peripheral contour of the magnetic cylinder (2) is based on a regular polygon, and curves are arranged at the connections of sides of the regular polygon to smoothly connect the sides of the regular polygon.

4. The permanent magnet DC motor according to any one of claims 1-3, **characterized in that** the number of sides of the polygon of the outer peripheral contour of the magnetic cylinder is 4, 6, 8 or 10.

5. The permanent magnet DC motor according to any one of claims 1-3, **characterized in that** the inner contour and the outer contour of the housing (1) are in the same form as the outer peripheral contour of the magnetic cylinder (2).

6. The permanent magnet DC motor according to any one of claims 1-3, wherein the number of magnetic poles corresponding to the magnetic cylinder (2) is 2, 4, 6, 8 or 10.

7. The permanent magnet DC motor according to any one of claims 1-3, wherein the waveforms of the surface magnetic curves corresponding to each magnetic pole are the same.
